# EUROPEAN PATENT SPECIFICATION

(11) **EP 3 514 018 B1**
(45) Date of publication and mention of the grant of the patent: **27.08.2025**
(21) Application number: 18153015.5
(22) Date of filing: 23.01.2018
(51) Int. Cl.: B60R 16/037, B60N 2/02

(54) **COMPUTER-IMPLEMENTED METHOD AND SYSTEM FOR ADJUSTING AT LEAST ONE SEAT IN A VEHICLE**
COMPUTERIMPLEMENTIERTES VERFAHREN UND SYSTEM ZUM VERSTELLEN MINDESTENS EINES SITZES IN EINEM FAHRZEUG
PROCÉDÉ ET SYSTÈME DE MISE EN OEUVRE PAR ORDINATEUR POUR RÉGLER AU MOINS UN SIÈGE DANS UN VÉHICULE

(43) Date of publication of application: 24.07.2019
(73) Proprietor: Alpine Electronics, Inc., Tokyo (JP)
(72) Inventor: STAPEL, Thorsten, 70567 Stuttgart (DE)
(74) Representative: Schmitt-Nilson Schraud Waibel Wohlfrom Patentanwälte Partnerschaft mbB

(56) References cited:
- US-A1- 2014 052 345
- US-A1- 2015 206 206
- US-A1- 2017 305 437
- US-B1- 9 229 905

## Description

The present invention relates to a computer-implemented method and system for adjusting at least one component of at least one seat in a vehicle, and to a computer program product capable to perform such method.

Vehicle seat assemblies are commonly used in vehicles, such as commonly known cars, to accommodate one or more occupants of the vehicles. A vehicle seat or seat assembly may include a number of adjustable components, such as backrest and the seating area, which are adjustable in various directions and/or dimensions, such as including forward and back position (longitudinal position of seating area), height position, and seat back position (inclination of backrest). In some vehicles, these adjustable features may be power controlled by the operator, for example, using a switch and appropriate driving motors. Such power seat adjusters are useful to accommodate occupants of different size and height as well as to provide a comfortable seating position to suit each occupant's preference. It is also known to provide the driver and/or passenger seat with memory capability to automatically move the seat adjuster to one of one or more memory or recall positions which are preset by an occupant and may be activated, for example, by pressing a button of a key assigned to the particular occupant, such as the driver.

JP 2006-213150 A discloses a driving position setting device to automatically adjust an adjusting portion of the device to affect a driving posture as a driver is seated on a driver's seat. The driving position setting device is furnished with a plurality of load sensors 2 mounted on a seat surface part 1A of the driver's seat of an automobile to detect a load when the driver is seated on the driver's seat, a database 4 to previously memorize a driving posture data corresponding to a physical data of the driver computed in accordance with an output value of the load sensors 2, a driving posture setting device 3 to compute the physical data by taking up the output value of the load sensor 2 and to acquire the driving posture data corresponding to the physical data from the database 4 and a driving position adjusting device 5 furnished with an adjusting part adjustable in accordance with the driving posture of the driver, to take up the driving posture data from the driving posture setting device 3 and to adjust the adjusting part in accordance with the driving posture data.

While such driver and/or passenger seat with memory capability may be useful in an automobile which is used by a particular number of persons who are "memorized" in the system, it may not be as useful in an environment with frequently changing users, such as in the car sharing or car rental field. In such use cases, individual automobiles are typically used by different persons only once, so that memory capabilities cannot provide great benefit since the particular user will likely not use this car again after having returned it back. Thus, every time when renting a car from a car rental provider or car sharing provider, the user will have to adjust his or her seat position to the particular type of rented car.

US 2017/305437 A1 describes a system and method for obtaining crowd-sourced vehicle setting data and using machine learning to recommend vehicle setting values for a driver. In a vehicle settings data sharing system driver vehicle setting values are crowd-sourced from multiple users in an anonymous manner. The crowd-sourced driver vehicle setting values are processed using machine learning to generate one or more vehicle setting recommendations to other users. The recommendations may be for vehicle settings that the user has not yet activated or vehicle setting values that are frequently used for a particular vehicle, such as adjusting seat position.

It is thus an object of the present invention to provide a method and system for adjusting at least one component of at least one seat in a vehicle which may facilitate the seat adjustment procedure for the user when renting a vehicle, such as a car, for example from a vehicle rental or car sharing provider.

The invention relates to a computer-implemented method and system for adjusting at least one component of at least one seat in a vehicle according to the appended claims. The invention further relates to a computer program product capable to perform such method. Embodiments thereof are disclosed herein below and in the dependent claims.

The invention provides the advantage that by using the first vehicle data (such as vehicle type), the first user data (such as user identification data of the first user), the at least one second parameter (such as a seat adjustment parameter defining a longitudinal position of the seat in the second vehicle), the second vehicle data (such as a vehicle type), and the second user data (such as user identification data of the second user), the at least one first parameter, e.g. for adjusting a longitudinal position of the seat in the first vehicle, can be determined without the first user being required to adjust it manually. For example, if the second user has already adjusted the position of the seat in the second vehicle at a previous point of time, this position data may be used for adjusting the position of the seat in the first vehicle with respect to the first user by taking into account the data and parameters as set out above.

In the above terminology and as used herein below, "first", "second", "third", etc. are not meant to designate any temporal order of actions or occurrences, but are simply used to distinguish different entities, such as the users, vehicles and data from each other.

For example, in a potential use scenario, the second user has to set his or her seat adjustments in the second vehicle manually (e.g. by using power seat adjusters). These seat adjustment settings will be stored in the database and may be compared with the seat adjustment settings of other users in this or other cars. The invention makes it thus possible for the first user of the first car to use seat adjustment settings of other users (such as the second user) who used, for example, the same or a similar car type before and had similar seat adjustment settings. The first user is thus not required to set his or her seat adjustments in the first vehicle manually. This may facilitate the seat adjustment procedure for the first user of the first vehicle when renting the first vehicle, such as a car, for example from a vehicle rental or car sharing provider.

According to an embodiment, if the first user will readjust the seat adjustment settings, this information may also be stored in the database and may be used to provide other users in the future with a more precise seat adjustment setting in the respective vehicle. The more information the system gets from different users, the more precise would be the suggestion for a seat adjustment setting for an individual user for a car.

According to an embodiment, determining the at least one first parameter comprises comparing the first vehicle data and the second vehicle data and determining the at least one first parameter based on a similarity measure between the first and second vehicle data. The vehicle data may be indicative of a vehicle type, such as a type number designating a particular vehicle class of the manufacturer (such as VW Golf, or Toyota Prius). This enables the first user of the first car to use seat adjustment settings of the second user, if the second user used, for example, the same or a similar car type (such as VW Golf, or Toyota Prius) before.

According to a further embodiment, determining the at least one first parameter comprises comparing the first user data and the second user data and determining the at least one first parameter based on a similarity measure between the first and second user data. The user data may be indicative of user identification, and/or his/her biometric height, and/or previous seat adjustment settings in previously used vehicles. This enables the first user of the first car to use seat adjustment settings of the second user, if the second user, for example, had similar seat adjustment settings.

The above described determination steps may also be combined with each other, that is, the at least one first parameter may be determined based on a similarity measure between the first and second user data and a similarity measure between the first and second vehicle data. In addition, the similarity measures may be respectively weighted in such determination of the at least one first parameter.

According to an embodiment, the at least one first parameter is configured for being used in the first vehicle for adjusting at least one longitudinal and/or height position of the at least one component of the at least one seat in the first vehicle.

According to an embodiment, the database stores data with respect to a plurality of vehicles. Particularly, the database stores, with respect to a plurality of vehicles and a plurality of users associated with one or more of the plurality of vehicles, at least one respective parameter indicative of a seat adjustment in a respective one of the plurality of vehicles, respective vehicle data indicative of a respective one of the vehicles and respective user data indicative of a respective one of the users. With more such data stored in the database, a suggestion for an appropriate seat adjustment setting for an individual user of a car could be improved.

According to an embodiment, determining the at least one first parameter comprises comparing the first vehicle data with a respective one of the stored vehicle data and determining the at least one first parameter based on a similarity measure between the first vehicle data and a respective one of the stored vehicle data. According to a further embodiment, determining the at least one first parameter comprises comparing the first user data with a respective one of the stored user data and determining the at least one first parameter based on a similarity measure between the first user data and a respective one of the stored user data. These determination steps may also be combined with each other and, for example, weighted, depending on the particular implementation. With a higher amount of such data stored in the database and evaluated by the processing device, a suggestion for an appropriate seat adjustment setting for an individual user of a car could be improved.

According to an embodiment, the method further comprises storing in the database, during a manual setting operation performed by the first user, at least one parameter indicative of a seat adjustment in a third vehicle used by the first user previously to the first vehicle, and storing the at least one parameter associated with the first user data and third vehicle data indicative of the third vehicle in the database. This parameter set by a manual setting operation performed by the first user may be compared with any of the parameters of the database of other users, and one of the parameters may be selected which is close or similar to the manually set parameter depending, for example, on the type of vehicle.

The method further comprises storing in the database, with respect to the first user, at least one third parameter indicative of a seat adjustment in a third vehicle previously used by the first user and different from the first vehicle, third vehicle data indicative of the third vehicle and the first user data associated with the third vehicle data. The step of determining the at least one first parameter comprises comparing the first vehicle data with the third vehicle data and determining the at least one first parameter based on the at least one third parameter and a difference between the first vehicle data and the third vehicle data. This has the advantage that, if the user is using the third vehicle and thereafter the first vehicle (i.e. another car, for example), the system may determine a difference in vehicle data (e.g. vehicle length) between the third vehicle and the first vehicle, and may adjust the seat adjustment settings for the first vehicle according to this difference and based on the at least one parameter used for the third vehicle.

According to an embodiment, when the first user uses the third vehicle for the first time, the method comprises the steps of determining at least one seat adjustment in the third vehicle, determining the at least one third parameter therefrom, and storing the at least one third parameter in the database associated with the first user data. In this way, a first manual user setting can be stored in the database which can be taken as a reference for any future seat adjustment settings in any other vehicle types.

According to a further embodiment, when the first user readjusts at least one seat adjustment in the first vehicle, at least one parameter indicative of the readjustment is transmitted back to the database, and the at least one parameter is stored in the database associated with the first user data and first vehicle data. In this way, a refinement of the adjustment procedure and accuracy, also with respect to other users, can be achieved.

According to another aspect, there is provided a computer program product comprising software code sections which are configured to perform a method according to the invention as described herein. In particular, such computer program may be implemented in principle in any processing device which is appropriate to perform the respective function. Such processing device may be, for example, implemented in, or part of, one or more processors, e.g. of one or more server computers, or may be a separate component, or may be a distributed system using one or more processors and/or integrated circuits. The computer program may be stored on a computer readable medium.

According to an embodiment, at least part of at least one of the processing device and database are respectively implemented in one or more computer system resources accessible through the Internet. Such computer system resources may be, for example, implemented in, or part of, one or more processors, e.g. of one or more server computers, or may be a separate component, or may be a distributed system (e.g. connected through the Internet or another network) using one or more processors and/or integrated circuits.

According to an embodiment, the processing device is programmed with an algorithm having a deep learning architecture. For example, the processing device includes an integrated circuit which is programmed according to a set of parameters provided from a multi layer neural network, and/or the processing device is coupled with a memory which is programmed according to a set of parameters provided from a multi layer neural network. With such configuration, advantageously, a deep learning algorithm can be used to determine an appropriate seat adjustment setting for the first vehicle.

Any aspects and embodiments described herein with respect to the method can equally be employed in the system with the processing device (employing one or more processors, for example) configured by software and/or hardware appropriately.

Aspects of the invention and embodiments will now be described with reference to the following Figures in which
- Fig. 1: shows a schematic view of a system according to an embodiment of the invention for adjusting one or more seat components of at least one vehicle seat,
- Fig. 2: shows a schematic view of a vehicle in greater detail which is configured to communicate with a system as shown in Fig. 1 according to an embodiment of the invention,
- Fig. 3: shows a flow diagram of a potential adjustment procedure according to an embodiment of the invention.

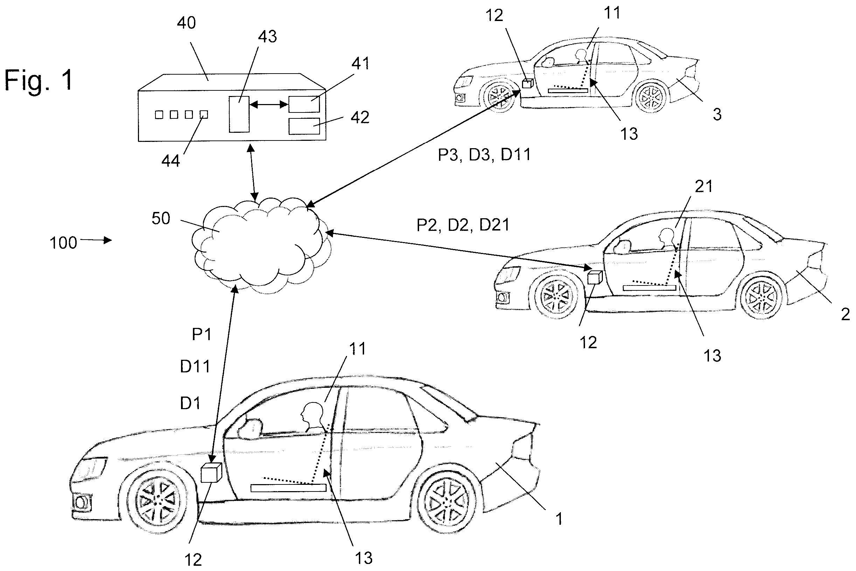

In Fig. 1 there is shown a system 100 for adjusting one or more seat components of at least one seat located in a vehicle, such as a car. In a potential use scenario, the system 100 is operated by a vehicle rental operator, such as a car rental, or by a car sharing operator which holds a plurality of cars which may be rented by different persons. Typically, when a person rents a car from a car rental or car sharing service, the person (called herein "user") gains access to the car by an electronic key. Such electronic keys are commonly known in various implementations used with standard cars and with car rental and car sharing services. Particular electronic keys make use of a smartphone and various kinds of bar codes which are read by software for gaining access to the vehicle. The user, who has to register himself or herself first with the car rental or car sharing provider, holds his or her smartphone near by the vehicle he or she wants to rent, and after verification of his or her profile (certification), gains access to the vehicle. Such electronic keys are also capable to store various kinds of user data, such as user identification data (e.g., name, address, age, driving licence, phone number, etc.), which may be evaluated and approved by the car rental or car sharing provider (e.g. through communication over the Internet) when the user gains access to the car.

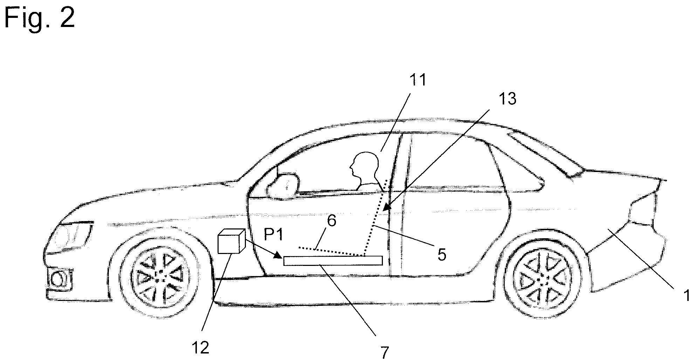

With reference to Fig. 2, a vehicle seat 13 for accommodating a driver or passenger ("user") 11 of a vehicle 1 may include a number of adjustable components, such as a backrest 5 and the seating area 6, which are adjustable in various directions, inclinations, and/or dimensions, such as including forward and back position (longitudinal position of seating area), height position, and seat back position (inclination of backrest). In some vehicles, these adjustable features may be power controlled by the user, for example, using a switch and appropriate driving motors. Such driving motors (including their power electronics) may be included in at least one adjustment means 7 which configured for adjusting a position of at least one of the components 5, 6 of the seat 13. For example, the motor(s) of the adjustment means 7 may adjust a longitudinal and/or height and/or inclination position of the seating area 6 and/or backrest 5, as is commonly known in standard cars. For adjusting the one or more positions, the adjustment means 7 receives one or more parameters which is/are indicative of a seat adjustment of the seat 13. For example, the adjustment means 7 receives at least one parameter P1 which is indicative of a longitudinal position of the seating area 6. With the received parameter P1 (e.g. indicating respective position coordinates), the driving motors of the adjustment means 7 adjust the corresponding longitudinal position of the seating area 6 of the seat 13. The at least one parameter P1 may also include further parameters indicative of the inclination of the backrest 5 and/or height of the seating area 6. The at least one parameter P1 may be received from a control unit 12, such as an ECU (electronic control unit) or central head unit, of the vehicle 1. The control unit 12, as set out in more detail below, may function as a receiver which receives the at least one parameter P1, processes the parameter(s) P1 if necessary, and transmits the at least one parameter P1 to the adjustment means 7 for adjusting the position of the respective seat component 5, 6 of the seat 13.

Once the user has access to the car he or she wants to rent, it will be necessary that the user adjusts the seat (e.g., the driver's seat or the passenger seat) to his or her preferred position. Despite of using power seat adjustment components, it may be cumbersome for the user to first adjust his or her seating position every time, particularly in a car sharing application when the user, for example, rents a plurality of cars within a short time period.

To facilitate the seat adjustment procedure for the user when renting a vehicle, such as a car, for example from a car rental or car sharing provider, according to an embodiment of the invention, the car rental or car sharing provider holds a database which stores, with respect to a plurality of vehicles and a plurality of users associated with one or more of the plurality of vehicles, at least one respective parameter (such as P1, P2 or P3, explained in more detail below) which is indicative of a seat adjustment in a respective one of the plurality of vehicles. The database further stores respective vehicle data indicative of a respective one of the vehicles and respective user data indicative of a respective one of the users.

With reference to Fig. 1, such database may be part of, or connected with, one or more computer system resources 40 which is accessible through the Internet 50. For example, one or more computer system resources may be formed by one or more server computers 40 which may be located at or remote from the respective vehicle and vehicle rental or car sharing provider. The server computer 40 according to Fig. 1 comprises one or more processing devices 41, 42, a memory for storing a database 43 as described above, and various other memories 44 for storing various programs or algorithms used with the present invention. For the purposes of the present invention, the processing device 41 may perform the steps described herein alone or in combination with any other processing device. The processing device 41 may be, for example, implemented in, or part of, one or more microprocessors, e.g. of one or more server computers, or may be a separate component, or may be a distributed system (e.g. couple through the Internet) using one or more processors and/or integrated circuits.

For example, the one or more computer system resources 40 or server computers, respectively, may be part of or form a so-called cloud computing infrastructure, which is an IT infrastructure typically established through a computer network which does not need to be installed on a local computer system, e.g. of the car rental or car sharing provider, but is accessible, for example, through the Internet.

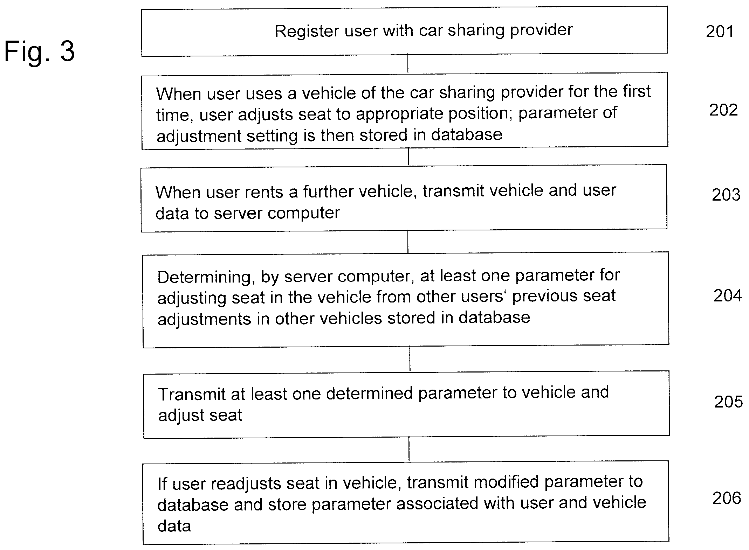

Fig. 3 shows a flow diagram of a potential adjustment procedure according to an embodiment of the invention. In connection with Fig. 1, potential embodiments of the invention will now be described.

In a potential use scenario, for example, according to a step 201 a user 11 (also designated herein as "first user"), who wants to rent a car, preferably registers his/her profile in advance with the car provider. To this end, the user 11 provides user data D11 to the car sharing provider, for example as set out above. When the user 11 thereafter rents a car, the user 11 will be certified, for example in a procedure as set out above.

In step 202, in this embodiment, preferably when user 11 uses a vehicle of the car sharing provider for the first time, for example vehicle 3 according to Fig. 1, the user 11 adjusts the vehicle seat 13 (e.g. as shown in Fig. 2) of the vehicle 3 to an appropriate position which fits best to his or her needs. At least one parameter P3 indicative of such seat adjustment may then be stored in the database 43 associated with the user data D11 of the user 11 and the vehicle data D3 of vehicle 3, e.g. through a wireless communication via the Internet 50 between the vehicle 3 and the server computer 40. To this end, for example, the control unit 12 of the vehicle 3 may communicate with the processing device 41 which stores the respective data in the database 43.

As described above, the database 43 stores a plurality of parameters indicative of a seat adjustment in a respective one of a plurality of vehicles (such as parameter P1 for a vehicle 1, P2 for a vehicle 2, P3 for a vehicle 3), respective vehicle data indicative of a respective one of the vehicles (such as vehicle data D1 for vehicle 1, D2 for vehicle 2, D3 for vehicle 3) and respective user data indicative of a respective one of the users 11, 21 (such as user data D11 for user 11, D21 for user 21). For example, if a user 21 (herein referred to as "second user" different from "first user" 11) has used vehicle 2 (different from vehicle 1) before, and has adjusted his or her seat 13 appropriately, the respective parameter P2 indicative of the seat adjustment in vehicle 2 is transmitted to the database 43 associated with the user data D21 and vehicle data D2 and is stored in the database 43. This procedure is performed similarly for a plurality of other users who used respective other vehicles, so that the database 43, preferably, is representative of a higher amount of vehicles including various vehicle types, users and respective seat adjustments which may be evaluated in the further process, for example, by a deep learning algorithm.

In step 203, a method according to an embodiment of the invention starts with the step that a user, such as user 11, proceeds to rent a vehicle, such as vehicle 1, from the car sharing provider he or she registered with in step 201. Accordingly, the vehicle data D1 of vehicle 1 and user data D11 of user 11 are transmitted to the server computer 40 and processing device 41, respectively.

In step 204, the processing device 41 then processes the vehicle data D1 from the vehicle 1 and the user data D11. The processing device 41 further receives from the database 43 the parameter(s) P2 indicative of a seat adjustment in the vehicle 2, the vehicle data D2 and user data D21. In addition, if the database 43 has stored therein further parameters P3, P4, ... PN, etc. indicative of a seat adjustment in a respective one of a plurality of vehicles 3, 4, ... N (with N being an integer number greater than 0), the processing device 41 further receives from the database 43 the respective further parameter(s), respective vehicle data from the respective vehicle and associated user data.

The processing device 41 then determines from the vehicle data D1, the user data D11, the parameter(s) P2, the vehicle data D2, and the user data D21 at least one parameter P1 configured for being used in the vehicle 1 for adjusting at least one component (such as backrest 5, and/or seating area 6) of the seat 13 in the vehicle 1. If the database 43 has stored therein further parameters P3, P4, ... PN, etc. indicative of a seat adjustment in a respective one of a plurality of vehicles 3, 4, ... N, the respective parameters P3, P4, ... PN, vehicle data D3, D4, .... DN, and user data associated therewith may also be used.

After the determination, in step 205, the processing device 41 transmits the at least one parameter P1 to the vehicle 1 for adjusting the respective component 5, 6 of the seat 13 in the vehicle 1. To this end, for example, the control unit 12 of the vehicle 1 may communicate with the processing device 41 through a wireless communication via the Internet 50 between the vehicle 1 and the server computer 40. As set out above, the control unit 12 receives the parameter(s) P1, processes the same (e.g. adapts the parameter to the particular equipment and signal standard in the vehicle) and transmits the same to the adjustment means 7 for adjusting the position of the respective seat component 5, 6 of the seat 13. As this process may be performed automatically, the user 11 is relieved from a cumbersome manual adjustment procedure for adjusting his/her seat 13 in vehicle 1.

For example, the determination of the at least one parameter P1 in step 204 may comprise comparing the vehicle data D1 with a respective one of the stored vehicle data D1, D2, D3 ... DN and determining the at least one parameter P1 based on a similarity measure between the vehicle data D1 and a respective one of the stored vehicle data D1, D2, D3 ... DN. For example, if two vehicles compared with each other are of same or similar vehicle type (such as VW Golf or Toyota Prius), respective adjustment settings may be used from one of the stored vehicles and appropriately adapted for adjusting the seat 13 of vehicle 1. In this regard, a deep learning algorithm may advantageously be applied as it may consider a plurality of various input parameters in various weightings over a certain period of time.

Alternatively, or in combination therewith, the determination of the at least one parameter P1 may comprise comparing the user data D11 with a respective one of the stored user data D11, D21, ... DM (with M being an integer number greater than 0) and determining the at least one parameter P1 based on a similarity measure between the user data D11 and a respective one of the stored user data D11, D21, ... DM. For example, if the compared users are of similar height, or have adjusted their seats in the same type/class of cars similarly in the past, respective adjustment settings may be used from a stored vehicle and appropriately adapted for adjusting the seat 13 of vehicle 1. In this regard, again a deep learning algorithm may be advantageously applied as it may consider a plurality of various input parameters, also in combination with any other input parameters in various weightings, over a certain period of time.

For example, the processing device 41 may determine from the received data from the vehicle 1, user data D11 and the database 43, in which of the stored vehicles the user 11 has already been seated, and which other user of the stored users has been seated in a same or similar vehicle and had same or similar seat adjustment settings. These adjustment settings of one or more matching pairs may then be taken as a reference for adjusting the parameter P1. The process may then proceed to derive an appropriate parameter P1 for adjusting the seat 13 of vehicle 1 with respect to user 11. Such determination may be made preferably by a deep learning algorithm as set out above.

According to a further optional step 206, if the user 11 readjusts the seat 13 in the vehicle 11, a modified parameter (such as a modified parameter P1, e.g., indicating a modified position coordinate of seat 13) is transmitted back to the database 43 and stored therein associated with user data D11 and vehicle data D1. This information may then be used to provide other users in the future with a more precise seat adjustment setting. The more information the system gets from different users, the more precise would be the suggestion for an individual user of a vehicle.

According to a further embodiment, it may be advantageous in a case in which the user, who has already used a car (first car) of the car sharing provider, wishes to use another car (second car) of that provider, that the processing device may determine the difference between the first car and the second car and will adjust the proposed seat adjustment settings for the second car according to these differences. To this end, according to an embodiment, the database 43, for example, stores parameter(s) P3 indicative of a seat adjustment in vehicle 3 previously used by the user 11. A determination of the at least one parameter P1 for seat adjustment in vehicle 1 may then be made by the processing device 41 in that it compares the vehicle data D1 of vehicle 1 with the vehicle data D3 of vehicle 3 and determines the parameter(s) P1 based on the parameter(s) P3 and a difference between the vehicle data D1 and the vehicle data D3.

A benefit of the invention is that, with the method and system as described herein, it will be easier for a user to use an unknown car. The method and system do not need any specific measurement features, rather it may be sufficient to determine only the respective seat adjustment settings (e.g., respective position coordinates, which can be stored with common techniques, like in an electronic key as described above). Thus, advantageously, there are no additional hardware costs in the vehicle involved . The invention may particularly be useful for car-sharing providers as well as classical rental car providers, and for fleet management operators.

## Claims

1. A computer-implemented method for adjusting at least one component (5, 6) of at least one seat (13) in a vehicle (1), comprising:
- receiving, by a processing device (41), with respect to a first vehicle (1) and a first user (11) using the first vehicle, first vehicle data (D1) from the first vehicle (1) which are indicative of the first vehicle (1), and first user data (D11) indicative of the first user (11),
- receiving, by the processing device (41), with respect to a second vehicle (2) and an associated second user (21), which are different from the first vehicle (1) and the first user (11), at least one second parameter (P2) indicative of a seat adjustment in the second vehicle (2), second vehicle data (D2) indicative of the second vehicle (2) and second user data (D21) indicative of the second user (21) from a database (43),
- storing in the database (43), with respect to the first user (11), at least one third parameter (P3) indicative of a seat adjustment in a third vehicle (3) previously used by the first user (11) and different from the first vehicle (1), third vehicle data (D3) indicative of the third vehicle (3), and the first user data (D11) associated with the third vehicle data (D3),
- determining, by the processing device (41), from the first vehicle data (D1), the first user data (D11), the at least one second parameter (P2), the second vehicle data (D2), and the second user data (D21) at least one first parameter (P1) configured for being used in the first vehicle (1) for adjusting at least one component (5, 6) of at least one seat (13) in the first vehicle (1),
- wherein determining the at least one first parameter (P1) comprises comparing the first vehicle data (D1) with the third vehicle data (D3) and determining the at least one first parameter (P1) based on the at least one third parameter (P3) and a difference between the first vehicle data (D1) and the third vehicle data (D3), and
- transmitting, by the processing device (41), the at least one first parameter (P1) to the first vehicle (1) for adjusting the at least one component (5, 6) of the at least one seat (13) in the first vehicle (1).

2. The method according to claim 1, wherein determining the at least one first parameter (P1) comprises comparing the first vehicle data (D1) and the second vehicle data (D2) and determining the at least one first parameter (P1) based on a similarity measure between the first and second vehicle data (D1, D2).

3. The method according to claim 1 or 2, wherein determining the at least one first parameter (P1) comprises comparing the first user data (D11) and the second user data (D21) and determining the at least one first parameter (P1) based on a similarity measure between the first and second user data (D11, D21).

4. The method according to one of claims 1 to 3, wherein the database (43) stores, with respect to a plurality of vehicles (1, 2, 3) and a plurality of users (11, 21, 31) associated with one or more of the plurality of vehicles, at least one respective parameter (P1, P2, P3) indicative of a seat adjustment in a respective one of the plurality of vehicles (1, 2, 3), respective vehicle data (D1, D2, D3) indicative of a respective one of the vehicles and respective user data (D11, D21, D31) indicative of a respective one of the users (11, 21, 31).

5. The method according to claim 4, wherein determining the at least one first parameter (P1) comprises comparing the first vehicle data (D1) with a respective one of the stored vehicle data (D1, D2, D3) and determining the at least one first parameter (P1) based on a similarity measure between the first vehicle data (D1) and a respective one of the stored vehicle data (D1, D2, D3).

6. The method according to claim 4 or 5, wherein determining the at least one first parameter (P1) comprises comparing the first user data (D11) with a respective one of the stored user data (D11, D21, D31) and determining the at least one first parameter (P1) based on a similarity measure between the first user data (D11) and a respective one of the stored user data (D11, D21, D31).

7. The method according to one of claims 1 to 6, further comprising storing in the database (43), during a manual setting operation performed by the first user (11), at least one parameter (P3) indicative of a seat adjustment in a third vehicle (3) used by the first user (11) previously to the first vehicle (1), and storing the at least one parameter (P3) associated with the first user data (D11) and third vehicle data (D3) indicative of the third vehicle (3) in the database (43).

8. The method according to one of claims 1 to 7, wherein when the first user (11) readjusts at least one seat adjustment in the first vehicle (1), transmitting at least one parameter indicative of the readjustment to the database (43), and storing the at least one parameter associated with the first user data (D11) and first vehicle data (D1) in the database.

9. A computer program product comprising software code sections which are configured to perform a method according to one of claims 1 to 8.

10. A system for adjusting at least one component (5, 6) of at least one seat (13) in a vehicle (1), comprising
- a processing device (41) configured to receive, with respect to a first vehicle (1) and a first user (11) using the first vehicle, first vehicle data (D1) from the first vehicle (1) which are indicative of the first vehicle (1), and first user data (D11) indicative of the first user (11),
- the processing device (41) configured to receive, with respect to a second vehicle (2) and an associated second user (21), which are different from the first vehicle (1) and the first user (11), at least one second parameter (P2) indicative of a seat adjustment in the second vehicle (2), second vehicle data (D2) indicative of the second vehicle (2) and second user data (D21) indicative of the second user (21) from a database (43), the database (43) configured to store, with respect to the first user (11), at least one third parameter (P3) indicative of a seat adjustment in a third vehicle (3) previously used by the first user (11) and different from the first vehicle (1), third vehicle data (D3) indicative of the third vehicle (3), and the first user data (D11) associated with the third vehicle data (D3),
- the processing device (41) configured to determine, from the first vehicle data (D1), the first user data (D11), the at least one second parameter (P2), the second vehicle data (D2), and the second user data (D21) at least one first parameter (P1) configured for being used in the first vehicle (1) for adjusting at least one component (5, 6) of at least one seat (13) in the first vehicle (1), wherein determining the at least one first parameter (P1) comprises comparing the first vehicle data (D1) with the third vehicle data (D3) and determining the at least one first parameter (P1) based on the at least one third parameter (P3) and a difference between the first vehicle data (D1) and the third vehicle data (D3), and
- the processing device (41) configured to transmit the at least one first parameter (P1) to the first vehicle (1) for adjusting the at least one component (5, 6) of the at least one seat (13) in the first vehicle (1).

11. The system according to claim 10, wherein the at least one first parameter (P1) is configured for being used in the first vehicle (1) for adjusting at least one longitudinal and/or height position of the at least one component (5, 6) of the at least one seat (13) in the first vehicle (1).

12. The system according to claim 10 or 11, wherein the processing device (41) is programmed with an algorithm having a deep learning architecture.

13. The system according to one of claims 10 to 12, wherein at least part of at least one of the processing device (41) and database (43) are respectively implemented in one or more computer system resources (40) accessible through the Internet (50).

14. The system according to one of claims 10 to 13, further comprising the first vehicle (1) which comprises
- the at least one seat (13) for accommodating a driver or passenger (11) of the first vehicle,
- at least one adjustment means (7) configured for adjusting a position of the at least one component (5, 6) of the at least one seat (13), and
- a control unit (12) configured to communicate with the processing device (41) for receiving the at least one first parameter (P1) and transmitting the at least one first parameter (P1) to the at least one adjustment means (7) for adjusting the position of the at least one component (5, 6) of the at least one seat (13).

## Patentansprüche

1. Computerimplementiertes Verfahren zum Einstellen mindestens einer Komponente (5, 6) mindestens eines Sitzes (13) in einem Fahrzeug (1), das folgende Schritte aufweist:
- in Bezug auf ein erstes Fahrzeug (1) und einen das erste Fahrzeug nutzenden ersten Nutzer (11) erfolgendes Empfangen von ersten Fahrzeugdaten (D1) von dem ersten Fahrzeug (1), die das erste Fahrzeug (1) angeben, und von ersten Nutzerdaten (D11), die den ersten Nutzer (11) angeben, durch eine Verarbeitungseinrichtung (41),
- durch die Verarbeitungseinrichtung (41) erfolgendes Empfangen, in Bezug auf ein zweites Fahrzeug (2) und einen zugehörigen zweiten Nutzer (21), die von dem ersten Fahrzeug (1) und dem ersten Nutzer (11) verschieden sind, von mindestens einem zweiten Parameter (P2), der eine Sitzeinstellung in dem zweiten Fahrzeug (2) angibt, von zweiten Fahrzeugdaten (D2), die das zweite Fahrzeug (2) angeben, und von zweiten Nutzerdaten (D21), die den zweiten Nutzer (21) angeben, von einer Datenbank (43),
- in der Datenbank (43) in Bezug auf den ersten Nutzer (11) erfolgendes Speichern von mindestens einem dritten Parameter (P3), der eine Sitzeinstellung in einem dritten Fahrzeug (3) angibt, das zuvor von dem ersten Nutzer (11) genutzt wurde und von dem ersten Fahrzeug (1) verschieden ist, von dritten Fahrzeugdaten (D3), die das dritte Fahrzeug (3) angeben, sowie der ersten Nutzerdaten (D11), die den dritten Fahrzeugdaten (D3) zugeordnet sind,
- durch die Verarbeitungseinrichtung (41) erfolgendes Bestimmen von mindestens einem ersten Parameter (P1), der zur Verwendung in dem ersten Fahrzeug (1) zum Einstellen mindestens einer Komponente (5, 6) mindestens eines Sitzes (13) in dem ersten Fahrzeug (1) ausgebildet ist, aus den ersten Fahrzeugdaten (D1), den ersten Nutzerdaten (D11), dem mindestens einen zweiten Parameter (P2), den zweiten Fahrzeugdaten (D2) und den zweiten Nutzerdaten (D21),
- wobei das Bestimmen des mindestens einen ersten Parameters (P1) das Vergleichen der ersten Fahrzeugdaten (D1) mit den dritten Fahrzeugdaten (D3) sowie das Bestimmen des mindestens einen ersten Parameters (P1) auf der Basis des mindestens einen dritten Parameters (P3) sowie einer Differenz zwischen den ersten Fahrzeugdaten (D1) und den dritten Fahrzeugdaten (D3) beinhaltet, und
- mittels der Verarbeitungseinrichtung (41) erfolgendes Übermitteln des mindestens einen ersten Parameters (P1) an das erste Fahrzeug (1) zum Einstellen der mindestens einen Komponente (5, 6) des mindestens einen Sitzes (13) in dem ersten Fahrzeug (1).

2. Verfahren nach Anspruch 1,
wobei das Bestimmen des mindestens einen ersten Parameters (P1) das Vergleichen der ersten Fahrzeugdaten (D1) und der zweiten Fahrzeugdaten (D2) und das Bestimmen des mindestens einen ersten Parameters (P1) auf der Basis eines Ähnlichkeitsmaßes zwischen den ersten und zweiten Fahrzeugdaten (D1, D2) beinhaltet.

3. Verfahren nach Anspruch 1 oder 2,
wobei das Bestimmen des mindestens einen ersten Parameters (P1) das Vergleichen der ersten Nutzerdaten (D11) und der zweiten Nutzerdaten (D21) und das Bestimmen des mindestens einen ersten Parameters (P1) auf der Basis eines Ähnlichkeitsmaßes zwischen den ersten und zweiten Nutzerdaten (D11, D21) beinhaltet.

4. Verfahren nach einem der Ansprüche 1 bis 3,
wobei die Datenbank (43) in Bezug auf eine Mehrzahl von Fahrzeugen (1, 2, 3) und eine Mehrzahl von Nutzern (11, 21, 31), die einem oder mehreren der Mehrzahl von Fahrzeugen zugeordnet sind, mindestens einen jeweiligen Parameter (P1, P2, P3), der eine Sitzeinstellung in einem jeweiligen der Mehrzahl von Fahrzeugen (1, 2, 3) angibt, jeweilige Fahrzeugdaten (D1, D2, D3), die ein jeweiliges der Fahrzeuge angeben, und jeweilige Nutzerdaten (D11, D21, D31), die einen jeweiligen der Nutzer (11, 21, 31) angeben, speichert.

5. Verfahren nach Anspruch 4,
wobei das Bestimmen des mindestens einen ersten Parameters (P1) das Vergleichen der ersten Fahrzeugdaten (D1) mit jeweiligen der gespeicherten Fahrzeugdaten (D1, D2, D3) und das Bestimmen des mindestens einen ersten Parameters (P1) auf der Basis eines Ähnlichkeitsmaßes zwischen den ersten Fahrzeugdaten (D1) und jeweiligen der gespeicherten Fahrzeugdaten (D1, D2, D3) beinhaltet.

6. Verfahren nach Anspruch 4 oder 5,
wobei das Bestimmen des mindestens einen ersten Parameters (P1) das Vergleichen der ersten Nutzerdaten (D11) mit jeweiligen der gespeicherten Nutzerdaten (D11, D21, D31) und das Bestimmen des mindestens einen ersten Parameters (P1) auf der Basis eines Ähnlichkeitsmaßes zwischen den ersten Nutzerdaten (D11) und jeweiligen der gespeicherten Nutzerdaten (D11, D21, D31) beinhaltet.

7. Verfahren nach einem der Ansprüche 1 bis 6,
das ferner das in der Datenbank (43) während eines manuellen Einstellvorgangs durch den ersten Nutzer (11) erfolgende Speichern von mindestens einem Parameter (P3), der eine Sitzeinstellung in einem dritten Fahrzeug (3) angibt, das der erste Nutzer (11) vor dem ersten Fahrzeug (1) genutzt hat, sowie das Speichern des den ersten Nutzerdaten (D11) zugeordneten mindestens einen Parameters (P3) und der das dritte Fahrzeug (3) angebenden dritten Fahrzeugdaten (D3) in der Datenbank (43) beinhaltet.

8. Verfahren nach einem der Ansprüche 1 bis 7,
wobei dann, wenn der erste Nutzer (11) mindestens eine Sitzeinstellung in dem ersten Fahrzeug (1) neu einstellt, mindestens ein Parameter, der die Neueinstellung angibt, an die Datenbank (43) übermittelt wird und der mindestens eine Parameter, der den ersten Nutzerdaten (D11) und den ersten Fahrzeugdaten (D1) zugeordnet ist, in der Datenbank gespeichert wird.

9. Computerprogrammprodukt, das Softwarecodeabschnitte aufweist, die dazu ausgebildet sind, ein Verfahren gemäß einem der Ansprüche 1 bis 8 auszuführen.

10. System zum Einstellen mindestens einer Komponente (5, 6) mindestens eines Sitzes (13) in einem Fahrzeug (1), aufweisend:
- eine Verarbeitungseinrichtung (41), die dazu ausgebildet ist, in Bezug auf ein erstes Fahrzeug (1) und einen das erste Fahrzeug nutzenden ersten Nutzer (11) erste Fahrzeugdaten (D1), die das erste Fahrzeug (1) angeben, und erste Nutzerdaten (D11), die den ersten Nutzer (11) angeben, von dem ersten Fahrzeug (1) zu empfangen,
- wobei die Verarbeitungseinrichtung (41) dazu ausgebildet ist, in Bezug auf ein zweites Fahrzeug (2) und einen zugeordneten zweiten Nutzer (21), die von dem ersten Fahrzeug (1) und dem ersten Nutzer (11) verschieden sind, mindestens einen zweiten Parameter (P2), der eine Sitzeinstellung in dem zweiten Fahrzeug (2) angibt, zweite Fahrzeugdaten (D2), die das zweite Fahrzeug (2) angeben, und zweite Nutzerdaten (D21), die den zweiten Nutzer (21) angeben, von einer Datenbank (43) zu empfangen, wobei die Datenbank (43) dazu ausgebildet ist, in Bezug auf den ersten Nutzer (11) mindestens einen dritten Parameter (P3), der eine Sitzeinstellung in einem dritten Fahrzeug (3) angibt, das zuvor von dem ersten Nutzer (11) genutzt wurde und von dem ersten Fahrzeug (1) verschieden ist, dritte Fahrzeugdaten (D3), die das dritte Fahrzeug (3) angeben, sowie die den dritten Fahrzeugdaten (D3) zugeordneten ersten Nutzerdaten (D11) zu speichern,
- wobei Verarbeitungseinrichtung (41) dazu ausgebildet ist, aus den ersten Fahrzeugdaten (D1), den ersten Nutzerdaten (D11), dem mindestens einen zweiten Parameter (P2), den zweiten Fahrzeugdaten (D2) sowie den zweiten Nutzerdaten (D21) mindestens einen ersten Parameter (P1) zu bestimmen, der dazu ausgebildet ist, in dem ersten Fahrzeug (1) zum Einstellen mindestens einer Komponente (5, 6) mindestens eines Sitzes (13) in dem ersten Fahrzeug (1) verwendet zu werden, wobei das Bestimmen des mindestens einen ersten Parameters (P1) das Vergleichen der ersten Fahrzeugdaten (D1) mit den dritten Fahrzeugdaten (D3) und das Bestimmen des mindestens einen ersten Parameters (P1) auf der Basis des mindestens einen dritten Parameters (P) und einer Differenz zwischen den ersten Fahrzeugdaten (D1) und den dritten Fahrzeugdaten (D3) beinhaltet, und
- wobei die Verarbeitungseinrichtung (41) dazu ausgebildet ist, den mindestens einen ersten Parameter (P1) an das erste Fahrzeug (1) zu übermitteln, um die mindestens eine Komponente (5, 6) des mindestens einen Sitzes (13) in dem ersten Fahrzeug (1) einzustellen.

11. System nach Anspruch 10,
wobei der mindestens eine erste Parameter (P1) dazu ausgebildet ist, in dem ersten Fahrzeug (1) zur Einstellung mindestens einer Längs- und/oder Höhenposition der mindestens einen Komponente (5, 6) des mindestens einen Sitzes (13) in dem ersten Fahrzeug (1) verwendet zu werden.

12. System nach Anspruch 10 oder 11,
wobei die Verarbeitungseinrichtung (41) mit einem Algorithmus programmiert ist, der eine Deep-Learning-Architektur aufweist.

13. System nach einem der Ansprüche 10 bis 12,
wobei zumindest ein Teil von mindestens einer der Verarbeitungseinrichtung (41) und der Datenbank (43) jeweils in einer oder mehreren Computersystemressourcen (40) implementiert ist, auf die über das Internet (50) zugegriffen werden kann.

14. System nach einem der Ansprüche 10 bis 13,
das ferner das erste Fahrzeug (1) umfasst, das Folgendes aufweist:
- den mindestens einen Sitz (13) zum Aufnehmen eines Fahrers oder Beifahrers (11) des ersten Fahrzeugs,
- mindestens eine Einstelleinrichtung (7), die zum Einstellen einer Position der mindestens einen Komponente (5, 6) des mindestens einen Sitzes (13) ausgebildet ist, und
- eine Steuereinheit (12), die zur Kommunikation mit der Verarbeitungseinrichtung (41) ausgebildet ist, um den mindestens einen ersten Parameter (P1) zu empfangen und den mindestens einen ersten Parameter (P1) zu der mindestens einen Einstelleinrichtung (7) zum Einstellen der Position der mindestens einen Komponente (5 , 6) des mindestens einen Sitzes (13) zu übermitteln.

## Revendications

1. Un procédé mis en œuvre par ordinateur pour ajuster au moins un composant (5, 6) d'au moins un siège (13) dans un véhicule (1), comprenant :
- la réception, par un dispositif de traitement (41), en ce qui concerne un premier véhicule (1) et un premier utilisateur (11) utilisant le premier véhicule, des premières données du véhicule (D1) provenant du premier véhicule (1) qui sont indicatives du premier véhicule (1), et des premières données de l'utilisateur (D11) indicatives du premier utilisateur (11),
- la réception, par le dispositif de traitement (41), en ce qui concerne un deuxième véhicule (2) et un deuxième utilisateur associé (21), qui sont différents du premier véhicule (1) et du premier utilisateur (11), d'au moins un deuxième paramètre (P2) indicatif d'un ajustement de siège dans le deuxième véhicule (2), des deuxièmes données du véhicule (D2) indicatives du deuxième véhicule (2) et des deuxièmes données de l'utilisateur (D21) indicatives du deuxième utilisateur (21) provenant d'une base de données (43),
- le stockage dans la base de données (43), en ce qui concerne le premier utilisateur (11), d'au moins un troisième paramètre (P3) indicatif d'un ajustement de siège dans un troisième véhicule (3) précédemment utilisé par le premier utilisateur (11) et différent du premier véhicule (1), des troisièmes données du véhicule (D3) indicatives du troisième véhicule (3), et des premières données de l'utilisateur (D11) associées aux troisièmes données du véhicule (D3),
- la détermination, par le dispositif de traitement (41), à partir des premières données du véhicule (D1), des premières données de l'utilisateur (D11), d'au moins un deuxième paramètre (P2), des deuxièmes données du véhicule (D2), et des deuxièmes données de l'utilisateur (D21) d'au moins un premier paramètre (P1) configuré pour être utilisé dans le premier véhicule (1) pour ajuster au moins un composant (5, 6) d'au moins un siège (13) dans le premier véhicule (1),
- où la détermination d'au moins un premier paramètre (P1) comprend la comparaison des premières données du véhicule (D1) avec les troisièmes données du véhicule (D3) et la détermination d'au moins un premier paramètre (P1) basé sur au moins un troisième paramètre (P3) et une différence entre les premières données du véhicule (D1) et les troisièmes données du véhicule (D3), et - la transmission, par le dispositif de traitement (41), d'au moins un premier paramètre (P1) au premier véhicule (1) pour ajuster au moins un composant (5, 6) d'au moins un siège (13) dans le premier véhicule (1).

2. Le procédé selon la revendication 1, où la détermination d'au moins un premier paramètre (P1) comprend la comparaison des premières données du véhicule (D1) et des deuxièmes données du véhicule (D2) et la détermination d'au moins un premier paramètre (P1) basé sur une mesure de similarité entre les premières et les deuxièmes données du véhicule (D1, D2).

3. Le procédé selon la revendication 1 ou 2, où la détermination d'au moins un premier paramètre (P1) comprend la comparaison des premières données de l'utilisateur (D11) et des deuxièmes données de l'utilisateur (D21) et la détermination d'au moins un premier paramètre (P1) basé sur une mesure de similarité entre les premières et les deuxièmes données de l'utilisateur (D11, D21).

4. Le procédé selon l'une des revendications 1 à 3, où la base de données (43) stocke, en ce qui concerne une pluralité de véhicules (1, 2, 3) et une pluralité d'utilisateurs (11, 21, 31) associés à un ou plusieurs de la pluralité de véhicules, au moins un paramètre respectif (P1, P2, P3) indicatif d'un ajustement de siège dans un véhicule respectif de la pluralité de véhicules (1, 2, 3), des données respectives du véhicule (D1, D2, D3) indicatives d'un véhicule respectif et des données respectives de l'utilisateur (D11, D21, D31) indicatives d'un utilisateur respectif (11, 21, 31).

5. Le procédé selon la revendication 4, où la détermination d'au moins un premier paramètre (P1) comprend la comparaison des premières données du véhicule (D1) avec une donnée respective des données du véhicule stockées (D1, D2, D3) et la détermination d'au moins un premier paramètre (P1) basé sur une mesure de similarité entre les premières données du véhicule (D1) et une donnée respective des données du véhicule stockées (D1, D2, D3).

6. Le procédé selon la revendication 4 ou 5, où la détermination d'au moins un premier paramètre (P1) comprend la comparaison des premières données de l'utilisateur (D11) avec une donnée respective des données de l'utilisateur stockées (D11, D21, D31) et la détermination d'au moins un premier paramètre (P1) basé sur une mesure de similarité entre les premières données de l'utilisateur (D11) et une donnée respective des données de l'utilisateur stockées (D11, D21, D31).

7. Le procédé selon l'une des revendications 1 à 6, comprenant en outre le stockage dans la base de données (43), lors d'une opération de réglage manuel effectuée par le premier utilisateur (11), d'au moins un paramètre (P3) indicatif d'un ajustement de siège dans un troisième véhicule (3) utilisé par le premier utilisateur (11) avant le premier véhicule (1), et le stockage d'au moins un paramètre (P3) associé aux premières données de l'utilisateur (D11) et aux troisièmes données du véhicule (D3) indicatives du troisième véhicule (3) dans la base de données (43).

8. Le procédé selon l'une des revendications 1 à 7, où lorsque le premier utilisateur (11) réajuste au moins un ajustement de siège dans le premier véhicule (1), la transmission d'au moins un paramètre indicatif du réajustement à la base de données (43), et le stockage d'au moins un paramètre associé aux premières données de l'utilisateur (D11) et aux premières données du véhicule (D1) dans la base de données.

9. Un produit de programme informatique comprenant des sections de code logiciel configurées pour effectuer un procédé selon l'une des revendications 1 à 8.

10. Un système pour ajuster au moins un composant (5, 6) d'au moins un siège (13) dans un véhicule (1), comprenant
- un dispositif de traitement (41) configuré pour recevoir, en ce qui concerne un premier véhicule (1) et un premier utilisateur (11) utilisant le premier véhicule, des premières données du véhicule (D1) provenant du premier véhicule (1) qui sont indicatives du premier véhicule (1), et des premières données de l'utilisateur (D11) indicatives du premier utilisateur (11),
- le dispositif de traitement (41) configuré pour recevoir, en ce qui concerne un deuxième véhicule (2) et un deuxième utilisateur associé (21), qui sont différents du premier véhicule (1) et du premier utilisateur (11), au moins un deuxième paramètre (P2) indicatif d'un ajustement de siège dans le deuxième véhicule (2), des deuxièmes données du véhicule (D2) indicatives du deuxième véhicule (2) et des deuxièmes données de l'utilisateur (D21) indicatives du deuxième utilisateur (21) provenant d'une base de données (43), la base de données (43) configurée pour stocker, en ce qui concerne le premier utilisateur (11), au moins un troisième paramètre (P3) indicatif d'un ajustement de siège dans un troisième véhicule (3) précédemment utilisé par le premier utilisateur (11) et différent du premier véhicule (1), des troisièmes données du véhicule (D3) indicatives du troisième véhicule (3), et les premières données de l'utilisateur (D11) associées aux troisièmes données du véhicule (D3),
- le dispositif de traitement (41) configuré pour déterminer, à partir des premières données du véhicule (D1), des premières données de l'utilisateur (D11), d'au moins un deuxième paramètre (P2), des deuxièmes données du véhicule (D2), et des deuxièmes données de l'utilisateur (D21) au moins un premier paramètre (P1) configuré pour être utilisé dans le premier véhicule (1) pour ajuster au moins un composant (5, 6) d'au moins un siège (13) dans le premier véhicule (1), où la détermination d'au moins un premier paramètre (P1) comprend la comparaison des premières données du véhicule (D1) avec les troisièmes données du véhicule (D3) et la détermination d'au moins un premier paramètre (P1) basé sur au moins un troisième paramètre (P3) et une différence entre les premières données du véhicule (D1) et les troisièmes données du véhicule (D3), et
- le dispositif de traitement (41) configuré pour transmettre au moins un premier paramètre (P1) au premier véhicule (1) pour ajuster au moins un composant (5, 6) d'au moins un siège (13) dans le premier véhicule (1).

11. Le système selon la revendication 10, où au moins un premier paramètre (P1) est configuré pour être utilisé dans le premier véhicule (1) pour ajuster au moins une position longitudinale et/ou en hauteur d'au moins un composant (5, 6) d'au moins un siège (13) dans le premier véhicule (1).

12. Le système selon la revendication 10 ou 11, où le dispositif de traitement (41) est programmé avec un algorithme ayant une architecture d'apprentissage profond.

13. Le système selon l'une des revendications 10 à 12, où au moins une partie d'au moins un des dispositifs de traitement (41) et de la base de données (43) sont respectivement implémentés dans une ou plusieurs ressources de système informatique (40) accessibles via Internet (50).

14. Le système selon l'une des revendications 10 à 13, comprenant en outre le premier véhicule (1) qui comprend :
- au moins un siège (13) pour accueillir un conducteur ou un passager (11) du premier véhicule,
- au moins un moyen d'ajustement (7) configuré pour ajuster une position d'au moins un composant (5, 6) d'au moins un siège (13), et
- une unité de contrôle (12) configurée pour communiquer avec le dispositif de traitement (41) afin de recevoir au moins un premier paramètre (P1) et transmettre au moins un premier paramètre (P1) au moins un moyen d'ajustement (7) pour ajuster la position d'au moins un composant (5, 6) d'au moins un siège (13).
